# EUROPÄISCHE PATENTSCHRIFT

(11) **EP 2 196 279 B1**
(45) Veröffentlichungstag und Bekanntmachung des Hinweises auf die Patenterteilung: **31.08.2016**
(21) Anmeldenummer: 09014030.2
(22) Anmeldetag: 10.11.2009
(51) Int. Cl.: B23K 26/24, B23K 26/06, B23K 26/04

(54) **Schmelzfügeverfahren zur Herstellung einer Kehlnaht**
Fillet welding method
Procédé d'assemblage par soudage en clin

(30) Priorität: 09.12.2008 DE 102008061224
(43) Veröffentlichungstag der Anmeldung: 16.06.2010
(73) Patentinhaber: Bayerische Motoren Werke Aktiengesellschaft, 80809 München (DE)
(72) Erfinder: Berndl, Jürgen, 85405 Nandlstadt (DE); Hornig, Hans, 83536 Gars (DE)

(56) Entgegenhaltungen:
- WO-A1-2007/088122
- DE-A1- 10 113 471
- DE-A1- 19 625 873
- DE-A1-102004 039 006
- DE-A1-102004 039 410
- DE-A1-102007 027 377
- US-A1- 2001 008 231
- SHIBATA K ET AL: "WELDING OF ALUMINIUM CAR BODY PARTS WITH TWIN-SPOT HIGH-POWER ND: YAG LASER" WELDING INTERNATIONAL, TAYLOR & FRANCIS, ABINGDON, GB, Bd. 17, Nr. 12, 1. Januar 2003 (2003-01-01), Seiten 939-946, XP001184604 ISSN: 0950-7116

## Beschreibung

Die Erfindung bezieht sich auf ein Schmelzfügeverfahren zur Herstellung einer Kehlnaht im Inneneckbereich zweier Bau- und insbesondere zweier dünnwandiger, im Überlappstoß gefügter Aluminiumblechteile, mittels eines Hochenergiestrahls unter Zugabe eines Zusatzmaterials nach dem Oberbegriff des Patentanspruchs 1 (siehe Welding International 2003, Vol. 17, n° 12, pg 939-946: "Welding of Aluminium car body parts with twin-spot high-power Nd: YAG laser," K-Shibata ; et Al).

Aus der DE 101 13 471 B4 ist es bekannt, stumpfgefügte Blechteile an der Stoßfuge mit Hilfe eines bifokalen Laserstrahls mit sich überschneidenden, variabel einstellbaren Fokalbereichen aufzuschmelzen und durch einen nachlaufenden, konventionellen Schweißbrenner unter Zugabe eines Zusatzmaterials stoffschlüssig miteinander zu verbinden. Ferner ist in der DE 10 2007 027 377 A1 ein Laserschweißverfahren beschrieben, bei dem die Lateralabweichung zwischen dem Fügestoß und dem momentanen Bearbeitungspunkt des Laserstrahls im Wege einer Bildverarbeitung ermittelt und der Laserschweißkopf nach Maßgabe des so ermittelten Differenzsignals dem Fügestoß nachgeführt wird.

Anders als bei Stumpfnähten besteht jedoch bei Kehlnähten insbesondere an dünnwandigen, im Überlappstoß gefügten Aluminiumblechen häufig die Forderung, dass das untenliegende Blechteil auf der Rückseite durch die Kehlnaht nicht verletzt werden darf, und demgemäß ist es Aufgabe der Erfindung, ein Verfahren und eine Vorrichtung der eingangs genannten Art so auszubilden, dass ein Durchbrechen der Kehlnaht oder unzulässige Nahtabzeichnungen auf der der Kehlnaht abgewandten Bauteilrückseite verhindert werden.

Diese Aufgabe wird erfindungsgemäß durch das im Patentanspruch 1 gekennzeichnete Verfahren gelöst.

Erfindungsgemäß wird durch das abgestufte Intensitätsprofil des multifokalen Hochenergiestrahls mit sich überschneidenden Fokalbereichen in Verbindung mit der Schrägstellung des Hochenergiestrahls ein gezielt erhöhter Wärmeeintrag sowohl am Zusatzmaterial als auch an der Innenecke der Bauteile erreicht und zugleich ein zu tiefes Aufschmelzen der seitlich angrenzenden Bauteilzonen verhindert und so ein räumlich exakt definierbares Schmelzbad und dadurch eine qualitativ hochwertige Schweiß- oder Lötverbindung insbesondere auch an dünnwandigen, im Überlappstoß gefügten Blechteilen ohne die Gefahr eines Durchbrechens der Kehlnaht oder unzulässiger Nahtabzeichnungen auf der Bauteilrückseite erhalten, mit dem weiteren Effekt, dass durch die erfindungsgemäßen Maßnahmen auch der bei vergleichbaren Verfahren enge Toteranzbereich für einen Lateralversatz zwischen dem Bearbeitungspunkt des Hochenergiestrahls und der Innenecke der Bauteile signifikant aufgeweitet wird, wobei aus Sicherheitsgründen zusätzlich ein in den Schmelzfügekopf integriertes Bildüberwachungssystem vorgesehen wird, welches bei einer Grenzwertüberschreitung des Lateralversatzes ein Warnsignal zur Unterbrechung des Schmelzfügeprozesses erzeugt.

Durch die Einbeziehung des Bildüberwachungssystems in den Schmelzfügekopf ergibt sich eine äußerst gedrängte Bauweise, die sich dadurch weiter verbessern lässt, dass die Lichtquelle des Überwachungssystems aus einer die Hochenergiestrahl-Ausgangsöffnung des Schmelzfügekopfes umschließenden LED-Anordnung besteht.

Besonders in dem bevorzugten Anwendungsfall von dünnwandigen, im Überlappstoß gefügten Aluminiumblechteilen wird die die Innenecke begrenzende Stirnseite des einen Blechteils vorzugsweise unter einem stumpfen Winkel zu dem die Innenecke begrenzenden Wandabschnitt des anderen Blechteils abgeschrägt, wodurch sich eine nochmals höhere Festigkeit der Schweiß- oder Hartlötverbindung erreichen lässt.

Die Verfahrensparameter des Schweiß- oder Lötprozesses werden natürlich je nach Anwendungsfall unterschiedlich festgelegt. Bei der praktischen Erprobung hat es sich jedoch als besonders vorteilhaft erwiesen, wenn die Strahlrichtung des multifokalen Hochenergiestrahls um mehr als 20° zu den beiden die Innenecke begrenzenden Wandabschnitten der Bauteile geneigt und/oder der Schnittflächenanteil an der Gesamtfläche der Fokalbereiche auf einen Wert von etwa 20 bis 30% eingestellt wird. Ferner empfiehlt es sich, die Gesamtbreite der Fokalbereiche in Querrichtung der Innenecke nach Maßgabe des Durchmessers eines als Zusatzmaterial zugeführten Schweiß- oder Lötdrahts vorzuwählen.

Die Erfindung wird nunmehr anhand eines bevorzugten Ausführungsbeispiels in Verbindung mit den Zeichnungen näher erläutert. Es zeigen in stark schematisierter Darstellung:
- **Fig. 1**: die Seitenansicht eines Schmelzfügekopfes zur Durchführung der Erfindung; und
- **Fig. 2a, b,**: **c** den Schmelzfügekopf nach Fig. 1 beim Verschweißen zweier - in stark vergrößertem Maßstab dargestellter - dünnwandiger, im Überlappstoß gefügter Aluminiumblechteile **(a),** die Intensitätsverteilung des Hochenergiestrahls und die Position des Zusatzdrahtes an den Blechteilen **(b)** sowie die fertiggestellte Kehlnahtverbindung der Blechteile **(c).**

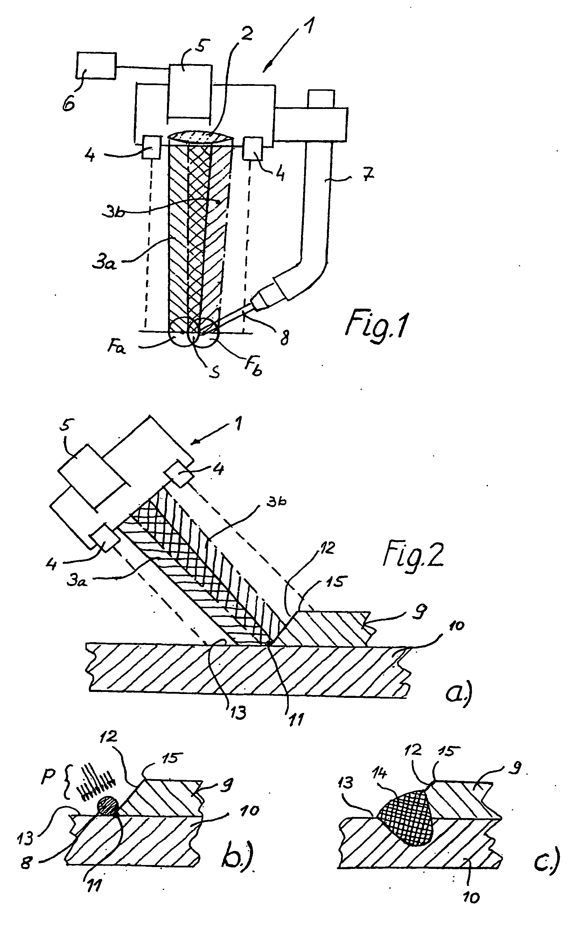

Fig. 1 zeigt einen Schmelzfügekopf 1 in Form eines Schweißkopfes mit einem optischen Linsensystem 2, durch das ein z. B. über ein Lichtleitkabel zugeführter, hochenergetischer Laserstrahl in einen bifokalen Doppelstrahl 3ₐ, 3_{b} mit sich in einem Schnittbereich S überlappenden Fokalbereichen Fₐ und F_{b} aufgeteilt wird, wobei der Flächenanteil des Schnittbereichs S an der Gesamtfläche der Fokalbereiche Fₐ + F_{b} bei etwa 20 bis 30% liegt.

In den Schweißkopf 1 integriert ist ferner eine auf den Arbeitsbereich des Schweißkopfes 1 ausgerichtete Lichtquelle in Form einer die Doppelstrahl-Ausgangsöffnung des Schweißkopfes 1 umschließenden Anordnung von lichtemittierenden Dioden 4 sowie eine das Leuchtfeld der Dioden 4 erfassende Videokamera 5 mit einer dieser nachgeordneten Auswerteschaltung 6, die das Ausgangssignal der Videokamera 5 auf die weiter unten beschriebene Weise verarbeitet.

Weiterhin ist am Schweißkopf 1 eine Zuführeinrichtung 7 angeordnet, die die Schweißstelle mit einem drahtförmigen Zusatzmaterial 8 und einem Schutzgasmantel versorgt.

Zum Verschweißen der in Fig. 2 ausschnittsweise gezeigten, im Überlappstoß gefügten Aluminiumblechteile 9, 10 geringer Wandstärke von typischerweise 1,2 mm wird das oben liegende Blechteil 9 vorab an seiner Stirnseite abgeschrägt, so dass die die Innenecke 11 begrenzenden Wandabschnitte 12,13 der beiden Blechteile 9, 10 einen stumpfen Winkel einschließen. Beim Schweißprozess selbst wird der Schweißkopf 1 mit seiner zentralen Strahlungsachse gegenüber jedem der beiden Wandabschnitte 12, 13 geneigt gehalten, nämlich unter einem Winkel von mehr als 20°, und so eingestellt, dass die Längsachse der linsenförmigen Schnittfläche S des Doppelstrahls 3 im Wesentlichen senkrecht und symmetrisch zur Innenecke 11 der Blechteile 9, 10 verläuft (Fig. 2a). Hierdurch wird, wie aus dem in Fig. 2b dargestellten Intensitätsprofil P des Doppelstrahls 3 ersichtlich ist, der Strahlungsanteil erhöhter Energiedichte, also die Strahlung innerhalb der fokalen Schnittfläche S, auf den Bereich der Innenecke 11 und den an dieser zugeführten Zusatzdraht 8 gerichtet und deckt damit den an dieser Stelle zum Aufschmelzen des Zusatzdrahtes 8 und der inneneckseitigen Blechteilzonen bis zur Nahtwurzel erhöhten Wärmebedarf, während die seitlich angrenzenden Blechteilbereiche der geringeren Strahlungsintensität in den Fokalabschnitten außerhalb der Schnittfläche S und demzufolge einem verringerten Wärmeeintrag ausgesetzt sind und daher weniger tief aufschmelzen. Auf diese Weise lässt sich das Intensitätsprofil eines multifokalen Hochenergiestrahls 3 so ausbilden, dass an den Blechteilen 9, 10 unter Zugabe des Zusatzmaterials 8 ein räumlich exakt definierbares Schmelzbad und daraus resultierend eine hochfeste Schmelzfügeverbindung in Form der in Fig. 2c dargestellten Kehlnaht 14 ohne die Gefahr eines Durchschweißens oder unzulässiger Nahtabzeichnungen auf der Rückseite des unten liegenden Blechteils 10 entsteht.

Von dem aus der Lichtquelle 4, der Videokamera 5 und der Auswerteschaltung 6 bestehenden Überwachungssystem wird die Lage des Schmelzbades bezüglich der im Beleuchtungsfeld liegenden Blechteilkante 15 kontinuierlich erfasst und bei einem Lateralversatz nachkorrigiert und/oder bei Überschreiten vorgegebener Toleranzgrenzen ein Warnsignal zur Unterbrechung des Schweißprozesses erzeugt.

Die Erfindung ist insbesondere auch zur Herstellung von Schmelznahtverbindungen zwischen den Innen- und Außenblechen von Kraftfahrzeugtüren in der in der DE 10 2007 005 443.4 A1 beschriebenen Bauart verwendbar.

## Patentansprüche

1. Schmelzfügeverfahren zum Schmelzfügen dünnwandiger, im Überlappstoß aufeinanderliegender Blech- und insbesondere Aluminiumblechteile (9, 10), bei dem eine Kehlnaht (14) im Inneneckbereich zweier Bauteile unter Zugabe eines Zusatzmaterials (8) in der Weise hergestellt wird, dass die Bauteile durch einen multifokalen Hochenergiestrahl (3) mit schräg zu den die Innenecke (11) begrenzenden Wandabschnitten (12, 13) der beiden Bauteile verlaufender Strahlrichtung und das Zusatzmaterial abschmelzenden Fokalbereichen (Fₐ, F_{b}) miteinander verbunden werden, **dadurch gekennzeichnet, dass** dü Fokalbereiche (Fa, Fb) sich überschneiden, und im Schnittbereich (S) die Innenecke der Bauteile überdecken, und dass
- die Dünnblechteile (9, 10) im Bereich des Schmelzbades und mindestens einer benachbarten Dünnblechkante (15) beleuchtet,
- das Beleuchtungsfeld videoerfasst und
- bei einem lateralen Positionsfehler des Schmelzbades bezüglich der Dünnblechkante (15) in einer nachgeordneten Auswerteschaltung (6) ein Warnsignal erzeugt wird.

2. Schmelzfügeverfahren nach Anspruch 1, **dadurch gekennzeichnet, dass** die Strahlrichtung des multifokalen Hochenergiestrahls (3) um mehr als 20° zu beiden die Innenecke begrenzenden Wandabschnitten (12,13) der Dünnbleche (9, 10) geneigt wird.

3. Schmelzfügeverfahren nach Anspruch 1 oder 2, **dadurch gekennzeichnet, dass** die die Innenecke (11) begrenzende Stirnseite (12) des oberen Dünnblechs (9) unter einem stumpfen Winkel zu dem die Innenecke begrenzenden Wandabschnitt (13) des unteren Dünnblechs (10) vorgefertigt wird.

4. Schmelzfügeverfahren nach einem der vorhergehenden Ansprüche, **dadurch gekennzeichnet, dass** der Schnittflächenanteil an der Gesamtfläche der Fokalbereiche (Fₐ, F_{b}) auf einen Wert von etwa 20 bis 30% eingestellt wird.

5. Schmelzfügeverfahren nach einem der vorhergehenden Ansprüche, mit Zuführung eines drahtförmigen Zusatzmaterials (8), **dadurch gekennzeichnet, dass** die Gesamtbreite der Fokalbereiche (Fₐ, F_{b}) quer zur Kehlnaht (14) nach Maßgabe des Drahtdurchmessers vorgewählt wird.

## Claims

1. A melt-joining method for melt-joining thin-walled sheet metal parts, and especially aluminium sheet metal parts (9, 10), positioned one on top of the other in the lap joint, in which method a fillet weld (14) is produced in the inner corner region of two components with the addition of an additional material (8) such that the components are joined together by a multifocal high-energy beam (3) with a beam direction running obliquely to the wall portions (12, 13), defining the inner corner (11) of the two components and with focal regions (Fₐ, F_{b}) which melt the additional material, **characterised in that** the focal regions (Fₐ, F_{b}) intersect each other and overlap the inner corner of the components In the intersection region (S), and **in that**
- the thin sheet metal parts (9, 10) are illuminated in the region of the molten bath and of at least one adjacent thin sheet metal edge (15),
- the illumination field is video recorded and
- a warning signal is generated in an evaluation circuit (6) positioned downstream when there is a lateral positional error of the molten bath with respect to the thin metal sheet edge (15).

2. A melt-joining method according to claim 1, **characterised in that** the beam direction of the multifocal high-energy beam (3) is inclined by more than 20° with respect to the two wall portions (12, 13), defining the inner corner, of the thin metal sheets (9, 10).

3. A melt-joining method according to claim 1 or claim 2, **characterised in that** the end face (12), defining the inner corner (11), of the upper thin metal sheet (9) is prefabricated at an obtuse angle to the wall portion (13), defining the inner corner, of the lower thin metal sheet (10).

4. A melt-joining method according to any one of the preceding claims, **characterised in that**
the intersection surface proportion of the total surface of the focal regions (Fₐ, F_{b}) is adjusted to a value of approximately 20 to 30 %.

5. A melt-joining method according to any one of the preceding claims, with the supply of a wire-shaped additional material (8), **characterised in that**
the total width of the focal regions (Fₐ, F_{b}) transversely to the fillet weld (14) is preselected subject to the wire diameter.

## Revendications

1. Procédé d'assemblage par fusion de pièces en tôle et en particulier de pièces en tôle d'aluminium (9, 10) par assemblage par chevauchement, selon lequel on obtient une soudure d'angle (14) dans la zone de coin interne de deux pièces avec addition d'un matériau supplémentaire (8) en reliant les pièces entre elles par l'intermédiaire d'un faisceau de haute énergie multifocal (3) ayant une direction s'étendant obliquement par rapport aux segments de paroi (12, 13) des deux pièces délimitant le coin interne (11), et les zones focales (Fₐ, F_{b}) faisant fondre le matériau supplémentaire,
**caractérisé en ce que**
les zones focales (Fₐ, F_{b}) se chevauchent et recouvrent le coin interne des pièces dans la zone de chevauchement (S), et :
- les pièces en tôle mince (9, 10) sont éclairées dans la zone du bain fondu et d'au moins une arête de tôle mince voisine (15),
- le champ d'éclairage est détecté par vidéo, et en présence d'un défaut de position latérale du bain fondu par rapport à l'arête de la tôle mince (15), un signal d'alarme est produit dans un circuit d'exploitation (6) annexe.

2. Procédé d'assemblage par fusion conforme à la revendication 1, **caractérisé en ce que**
la direction du faisceau de haute énergie multifocal (3) est inclinée de plus de 20° par rapport aux deux segments de paroi (12, 13) des tôles minces (9, 10) délimitant le coin interne.

3. Procédé d'assemblage par fusion conforme à la revendication 1 ou 2, **caractérisé en ce que**
la face frontale (12) de la tôle mince supérieure (9) délimitant le coin interne (11) est préfabriquée en faisant un angle obtus par rapport au segment de paroi (13) de la tôle mince inférieure (10) délimitant le coin interne.

4. Procédé d'assemblage par fusion conforme à l'une des revendications précédentes,
**caractérisé en ce que**
la proportion de la surface de chevauchement par rapport à la surface totale de la zone focale (Fₐ, F_{b}) est réglée à une valeur d'environ 20 à 30%.

5. Procédé d'assemblage par fusion conforme à l'une des revendications précédentes avec fourniture d'un matériau supplémentaire en forme de fil (8),
**caractérisé en ce que**
la largeur totale de la zone focale (Fₐ, F_{b}) transversalement à la soudure d'angle (14) est présélectionnée en fonction de la valeur du diamètre du fil.
